# EUROPEAN PATENT APPLICATION

(11) **EP 2 913 936 A1**
(43) Date of publication of application: **02.09.2015**
(21) Application number: 13850698.5
(22) Date of filing: 18.09.2013
(51) Int. Cl.: H04B 1/40

(54) **INTEGRATED RECEIVING APPARATUS**

(30) Priority: 01.11.2012 CN 201220570092 U
(71) Applicant: ZTE Corporation, Shenzhen, Guangdong 518057 (CN)
(72) Inventor: ZHAO, Na, Shenzhen Guangdong 518057 (CN); LI, Xiangling, Shenzhen Guangdong 518057 (CN); LEI, Mengbi, Shenzhen Guangdong 518057 (CN); ZHANG, Guojun, Shenzhen Guangdong 518057 (CN)
(74) Representative: Price, Nigel John King
(86) International application number: PCT/CN2013/083834
(87) International publication number: WO 2014/067363

(57) **Abstract**

An integrated receiving device is provided. The device includes a radio frequency signal selection module configured to select a radio frequency signal, a gain control module configured to adjust signal gain of the selected radio frequency signal and transmit the adjusted radio frequency signal to a frequency conversion module, a local oscillator selection module configured to select a local oscillator signal, the frequency conversion module configured to select a frequency conversion mode according to the adjusted radio frequency signal and the selected local oscillator signal and to perform frequency conversion on the adjusted radio frequency signal and the selected local oscillator signal, and an intermediate frequency processing module configured to output the frequency-converted signals after amplifying and filtering them. The device according to embodiments of the disclosure realizes monolithic integration of a module, enormously lowers power consumption and accommodates to multiple applications.

## Description

### TECHNICAL FIELD

The disclosure relates to a receiving device, and in particular to an integrated receiving device.

### BACKGROUND

Along with the development of the communications technology, the quality of network communications and the network coverage have become primary indicators of competitions among all service providers. As a result, with respect to a communication base station, power consumption, volume and reliability have likewise become key factors.

In a mobile communications system, a radio remote unit (Radio Remote Unit, RRU) has divided the base station into a near-end machine and a remote machine, i.e., a radio baseband control unit and a radio remote unit. The demand for miniaturizing the RRU and reducing costs has been raising the bar for the integration level of design requirements of a base station transceiver. In addition, in order to adapt to hybrid application of multiple standards and high bandwidth, the power consumption of the base station transceiver is required as low as possible.

### SUMMARY

In view of this, the disclosure is intended to provide an integrated receiving device, which is used to realize monolithic integration of a module, thus enormously lowering power.

To this end, the technical solutions of the disclosure are implemented as follows.

An integrated receiving device is provided, which includes:
a radio frequency signal selection module, configured to select a radio frequency signal;
a gain control module, configured to adjust signal gain of the selected radio frequency signal and transmit the adjusted radio frequency signal to a frequency conversion module;
a local oscillator selection module, configured to select a local oscillator signal;
the frequency conversion module, configured to select a frequency conversion mode according to the adjusted radio frequency signal and the selected local oscillator signal, and to perform frequency conversion on the adjusted radio frequency signal and the selected local oscillator signal; and
an intermediate frequency processing module, configured to output the frequency-converted signals after amplifying and filtering the frequency-converted signals.

Preferably, the radio frequency signal selection module, the gain control module, the local oscillator selection module, the frequency conversion module and the intermediate frequency processing module are encapsulated into a chip by a multi-chip module technology or a system-in-package technology.

Preferably, the frequency conversion mode may be either a mixing mode or a demodulating mode.

Preferably, the gain control module may adjust the signal gain by a voltage-controlled attenuator or a numerical control attenuator.

Preferably, the intermediate frequency processing module may output the frequency-converted signal using either a differential output mode or a single-end output mode.

The integrated receiving device, provided by the disclosure, includes the radio frequency signal selection module, the gain control module, the local oscillator selection module, the frequency conversion module and the intermediate frequency processing module; the device selects a radio frequency signal, adjusts the signal gain of the radio frequency signal, transmits the adjusted radio frequency signal to the frequency conversion module, selects a local oscillator signal and transmits the local oscillator signal to the frequency conversion module; the frequency conversion module selects the frequency conversion mode according to the adjusted radio frequency signal and the selected local oscillator signal, and performs the frequency conversion on the signal; after being amplified and filtered, the frequency-converted signal is output. It is obvious that, with the radio frequency signal selection module and the local oscillator selection module, the embodiments of the disclosure can perform selections on a plurality of types of radio frequency signals and local oscillator signals in view of demands, thus accommodating to various applications; in addition, according to the technical solutions of the disclosure, a plurality of modules are packaged within one chip, thus realizing monolithic integration of the modules; furthermore, by selecting different power supplies, the disclosure is capable of meeting requirements for transceiver performance under different scenarios, efficiently lowering the power consumption.

### BRIEF DESCRIPTION OF THE DRAWINGS

Fig. 1 is a structural diagram of an integrated receiving device according to an embodiment of the disclosure;
Fig. 2 is a first application diagram according to an embodiment of the disclosure;
Fig. 3 is a second application diagram according to an embodiment of the disclosure; and
Fig. 4 is a third application diagram according to an embodiment of the disclosure.

### DETAILED DESCRIPTION

The disclosure is further described with reference to the accompanying drawings and the embodiments of the disclosure hereinafter.

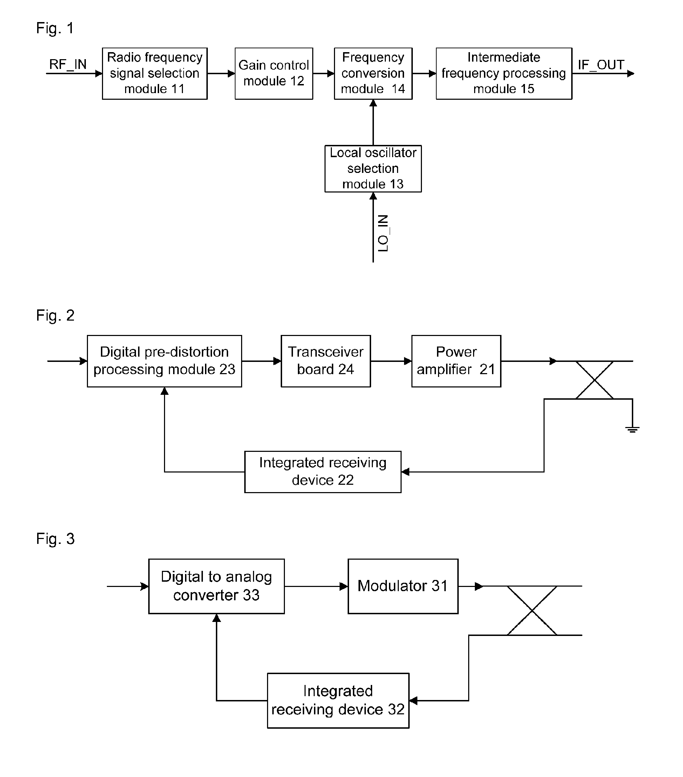

Fig. 1 is a structural diagram of an integrated receiving device according to an embodiment of the disclosure. As shown in Fig. 1, the embodiment of the disclosure provides an integrated receiving device, which includes a radio frequency signal selection module 11, a gain control module 12, a local oscillator selection module 13, a frequency conversion module 14 and an intermediate frequency processing module 15; wherein,
the radio frequency signal selection module 11 is configured to select a radio frequency signal and transmit the selected radio frequency signal to the gain control module 12;
it is noted that the radio frequency signal selection module 11 is capable of selecting an input radio frequency signal RF_IN by on-off control;
the gain control module 12 is configured to adjust signal gain of the selected radio frequency signal and transmit the adjusted radio frequency signal to the frequency conversion module 14;
it is noted that the gain control module 12 may adjust the signal gain by a voltage-controlled attenuator or a numerical control attenuator, and an adjustment range and adjustment accuracy of the signal gain may be adjusted to an appropriate range in accordance with demands; an interface mode of the gain control module 12 may either select a parallel control mode or a serial control mode in accordance with demands;
the local oscillator selection module 13 is configured to select a local oscillator signal and transmit the local oscillator signal to the frequency conversion module 14;
it is noted that the local oscillator selection module 13 may select an input local oscillator signal LO_IN by the on-off control;
the frequency conversion module 14 is configured to select a frequency conversion mode according to the adjusted radio frequency signal and the selected local oscillator signal, and perform frequency conversion on the signals;
it is noted that the frequency conversion module 14 may perform the frequency conversion on the signals using either a mixing mode or a demodulating mode, wherein using the demodulating mode may low demands for a sampling clock of an Analog to Digital (ADC) converter;
the intermediate frequency processing module 15 is configured to output the frequency-converted signals after amplifying and filtering the frequency-converted signals;
it is noted that the intermediate frequency processing module 15 filters the frequency-converted signals, which generally means restraining interferences outside the communications frequency band supported by a base station of mixed mode, such as an image interference, a semi-intermediate frequency interference, an aliasing interference and a transmit-receive interference; the intermediate frequency processing module 15 outputs the signals, IF_OUT, using either a differential output mode or a single-end output mode; wherein a frequency range and a bandwidth of the intermediate frequency meet an application requirement for either a zero intermediate frequency or a complex intermediate frequency in accordance with demands.

The radio frequency signal selection module 11 and the local oscillator selection module 13 of the integrated receiving device may be implemented by a switch; an on-off control is configured using a high/ low logic level or a Serial Peripheral Interface (SPI); in practice, the gain control module 12 of the integrated receiving device may be implemented by a voltage-controlled attenuator or a numerical control attenuator; in practice, the frequency conversion module 14 of the integrated receiving device may be implemented by a frequency converter of the integrated receiving device; in practice, the intermediate frequency processing module 15 of the integrated receiving device may be implemented by a power amplifier and a filter of the integrated receiving device.

The integrated receiving device provided by the embodiments of the disclosure packages a plurality of modules within one chip using a multi-chip module (MCM) technology or a System-in-Package (SIP) technology, i.e., the integrated receiving device packages the radio frequency signal selection module, the gain control module, the local oscillator selection module, the frequency conversion module and the intermediate frequency processing module within a chip by a MCM technology or a SIP technology. Therefore, the monolithic integration of a module is realized. In addition, the integrated receiving device provided by the embodiments of the disclosure meets system requirements for lowered power consumption by selecting different power supplies. For example, a power supply of 5V is selected for high performance work, whereas a power supply of 3.3V is selected when a performance requirement is lowered, thus lowering the power consumption. Furthermore, different voltages can be selected by the SPI or other modes to meet current requirements of the RRU on lower power consumption.

Fig. 2 is a first application diagram according to an embodiment of the disclosure. According to the embodiment, an integrated receiving device 22 of the disclosure may be utilized as a hardware supporting circuit processed by Digital Pre-distortion (DPD) to complete distortion collection processing of an output signal of a power amplifier. As shown in Fig. 2, a signal is transmitted to a Power Amplifier (PA) 21 from a transceiver board 24, once the signal is amplified, the signal enters into the integrated receiving device 22 of the disclosure via the coupled circuit according to the embodiment; To complete the distortion collection processing of the signal, the signal is then transmitted to the DPD processing module 23 after subjected to gain adjustment, frequency conversion and intermediate frequency processing; and the processed signal is transmitted to the transceiver board 24 as output;
it is noted that a linear requirement of an intermediate frequency processing module of the integrated receiving device 22 of the disclosure according to the embodiment is necessary to meet a linear requirement of the DPD.

Fig. 3 is a second application diagram according to an embodiment of the disclosure. According to the embodiment, an integrated receiving device 32 of the disclosure, utilized as a calibration pathway, is configured to perform a stray calibration of a transmitting link. As shown in Fig. 3, a signal is output from a modulator 31, and enters into the integrated receiving device 32 via the coupled circuit, and then the signal is subjected to gain adjustment and frequency conversion and then is fed back to a Digital to Analog Converter (DAC) 33, at which moment, the stray calibration restraint of the signal is finished.

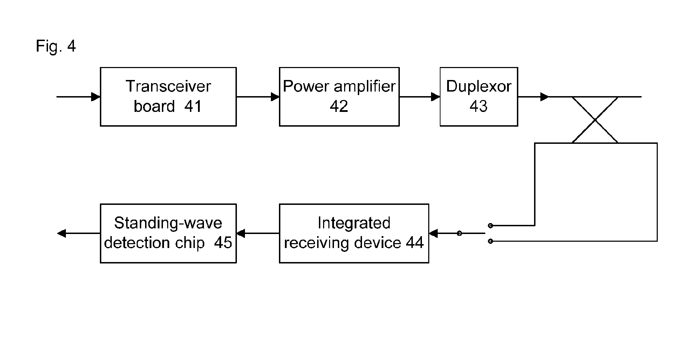

Fig. 4 is a third application diagram according to an embodiment of the disclosure. According to the embodiment, an integrated receiving device 44 of the disclosure is utilized as a standing-wave detection hardware supporting circuit to perform output standing-wave detection for a transmission signal. As shown in Fig. 4, the signal is transmitted by a transceiver board 41, amplified by a PA 42, and then output by a duplexer 43. A forwarding signal and a backward signal are respectively transmitted to two ends of a single-pole, double-throw switch via a coupled circuit. Either the forwarding signal or the backward signal is selected to be transmitted to the integrated receiving device 44 via the single-pole, double-throw switch, which is then fed back to a standing-wave detection chip 45 after subjected to gain adjustment and frequency conversion performed by the integrated receiving device 44, so that the standing-wave detection on the signal is finished.

The above mentioned are merely preferable embodiments of the disclosure, and are not intended to limit the protection scope of the disclosure. Any modification or variation without departing from the spirit and scope of the disclosure is included within the protection scope of the disclosure.

### INDUSTRIAL APPLICABILITY

Embodiments of the disclosure may select signals from a plurality of types of radio frequency signals and local oscillator signals through a radio frequency signal selection module and a local oscillator selection module in accordance with demands to accommodate to multiple applications. In addition, the embodiments of the disclosure package a plurality of modules within a chip, realizing monolithic integration of a module. Furthermore, the embodiments of the disclosure can meet transceiver performance requirements in different scenarios by selecting different power supplies, efficiently lowering power consumption.

## Claims

1. An integrated receiving device, comprising:
a radio frequency signal selection module, configured to select a radio frequency signal;
a gain control module, configured to adjust signal gain of the selected radio frequency signal and transmit the adjusted radio frequency signal to a frequency conversion module;
a local oscillator selection module, configured to select a local oscillator signal;
the frequency conversion module, configured to select a frequency conversion mode according to the adjusted radio frequency signal and the selected local oscillator signal, and to perform frequency conversion on the adjusted radio frequency signal and the selected local oscillator signal; and
an intermediate frequency processing module, configured to output the frequency-converted signals after amplifying and filtering the frequency-converted signals.

2. The device according to claim 1, wherein the radio frequency signal selection module, the gain control module, the local oscillator selection module, the frequency conversion module and the intermediate frequency processing module are packaged within a chip by a multi-chip module package technology or a system-in-package technology.

3. The device according to claim 1, wherein the frequency conversion mode is either a mixing mode or a demodulating mode.

4. The device according to claim 1, wherein the gain control module adjusts the signal gain by a voltage-controlled attenuator or a numerical control attenuator.

5. The device according to claim 1, wherein the intermediate frequency processing module outputs the frequency-converted signals using either a differential output mode or a single-end output mode.
